# FASCICULE DE BREVET EUROPEEN

(11) **EP 1 866 068 B1**
(45) Date de publication et mention de la délivrance du brevet: **04.12.2013**
(21) Numéro de dépôt: 06709366.6
(22) Date de dépôt: 21.02.2006
(51) Int. Cl.: B01J 8/02

(54) **DISPOSITIF POUR LE MELANGE ET LA REPARTITION D'UN GAZ ET D'UN LIQUIDE EN AMONT D'UN LIT GRANULAIRE**
VORRICHTUNG ZUM MISCHEN UND VERTEILEN EINES GASES UND EINER FLÜSSIGKEIT VOR EINER GRANULATSCHÜTTUNG
DEVICE FOR MIXING AND DISTRIBUTING A GAS AND A LIQUID UPSTREAM OF A GRANULAR BED

(30) Priorité: 17.03.2005 FR 0502647
(43) Date de publication de la demande: 19.12.2007
(73) Titulaire: Institut Français du Pétrole, 92852 Rueil Malmaison Cedex (FR)
(72) Inventeur: BOYER, Christophe, F-69390 Charly (FR); SVEZIA, Daniel, F-69320 Feyzin (FR)
(86) Numéro de dépôt international: PCT/FR2006/000406
(87) Numéro de publication internationale: WO 2006/097590

(56) Documents cités:
- EP-A- 1 437 175
- EP-A1- 1 180 394
- EP-A2- 1 180 393
- FR-A- 2 807 676
- US-A- 1 790 224
- US-A- 3 996 025
- US-A- 4 126 539
- US-A- 5 484 578

## Description

### Domaine de l'invention

L'invention concerne le domaine des appareillages généralement disposés à l'intérieur d'une enceinte dans laquelle est mis en oeuvre au moins un lit granulaire. Les domaines d'utilisation de l'invention couvrent la mise en oeuvre de lit granulaire dans des processus chimiques, physiques ou physico-chimique. L'invention concerne, plus particulièrement, le domaine des plateaux de distribution généralement montés à l'intérieur d'une enceinte et destinés à répartir uniformément un fluide à la surface d'un lit granulaire.

### Art antérieur

Le brevet français FR 2 842 435 décrit un dispositif de mélange et de répartition d'un fluide liquide et d'un fluide gazeux, placé en amont d'un lit granulaire dans un réacteur. Le dispositif décrit dans ce brevet comprends un plateau équipé de cheminées, lesdites cheminées disposant d'une partie supérieure débouchant au-dessus du plateau et d'une extrémité inférieure communiquant avec le dessous du plateau, la partie supérieure des cheminées étant dotée d'orifices latéraux. Dans ce dispositif, le liquide est amené par un système tubulaire depuis l'extérieur du réacteur sur le plateau de distribution, de manière à ce que l'extrémité inférieure dudit système tubulaire reste immergée dans le liquide accumulé au-dessus dudit plateau. Cette extrémité inférieure du système tubulaire peut, par ailleurs, être prolongée par des tubes perforés immergés dans le liquide accumulé au-dessus du plateau.

L'inconvénient d'un tel système est que le gaz et le liquide sont amenés dans le réacteur de manière séparée. En effet, il est souvent souhaitable de maximiser le contact entre le fluide gazeux et le fluide liquide avant de distribuer le mélange de ces fluides de façon homogène sur toute la section du réacteur. Il est souvent important, notamment dans le cas de processus chimiques, que la charge liquide soit saturée en composé réactifs issus du fluide gazeux, et ceci avant même que le mélange de gaz et de liquide traverse le lit catalytique.

Un inconvénient supplémentaire d'un tel système est qu'il ne peut être mis en charge qu'avec une quantité significative de liquide pour remplir le système tubulaire. De ce fait, les vitesses de liquide sont importantes au niveau de l'extrémité inférieure du système tubulaire, ou des orifices des tubes prolongeant cette extrémité. Ceci peut être une source de perturbations de l'interface entre le gaz et le liquide, ce qui compromet l'homogénéité du mélange entre le gaz et le liquide, d'une part, et l'uniformité de la distribution d'un tel mélange à la surface supérieure du lit, d'autre part.

La demande de brevet internationale WO 95/35159 décrit, quant à elle, un système de distribution pour diriger du gaz et du liquide à travers la surface d'un lit fixe de solides comprenant un plateau de distribution et une pluralité de tubes s'étendant à travers ledit plateau, chacun de ces tubes étant doté d'une pluralité d'orifices latéraux s'étendant verticalement au-dessus de la face supérieure du plateau, dans lequel deux groupes de ces tubes se distinguent par la position verticale de leurs orifices latéraux. Le dispositif décrit dans cette demande de brevet permet, grâce au positionnement des orifices latéraux des deux groupes de tubes, de réduire le débit de liquide s'écoulant à travers le plateau quand la hauteur de liquide accumulé sur ledit plateau atteint un niveau au-dessous duquel l'un des groupes de tubes ne comporte aucun orifice latéral. Par ailleurs, le gaz et le liquide sont amenés sur le plateau de distribution par l'intermédiaire de tubes verticaux montés sur la face supérieure dudit plateau et de fentes situées à la base de ces tubes.

L'inconvénient d'un tel système est que le gaz et le liquide sont introduits à l'état de mélange sur la face supérieure du plateau de distribution. Ce mode d'introduction génère, en partie à cause du bouillonnement du gaz dans le liquide, des perturbations de l'interface entre le gaz et le liquide.

Le dispositif de la présente invention permet de réduire, voire d'éliminer, les inconvénients évoqués ci-dessus.

Les documents EP 1 437 175, US 4,126,539 et US5,484,578 divulguent des dispositifs de mélange et de répartition d'un gaz et d'un liquide selon le préambule de la revendication 1.

Les documents EP 1 180 393 et EP 1 180 394 montrent un dispositif comprenant deux plateaux solidarisés par des cheminées.

### Résumé de l'invention

Un objet de la présente invention est de fournir un dispositif, monté dans une enceinte, permettant d'optimiser le mélange et la distribution d'un gaz et d'un liquide en amont d'un lit granulaire ou entre deux lits granulaires successifs.

Un autre objet de l'invention est de fournir un dispositif permettant l'introduction d'un gaz et d'un liquide dans une enceinte réactionnelle, et permettant également la redistribution uniforme et homogène de ce gaz et de ce liquide sur un lit granulaire.

Un autre objet de l'invention est de maximiser le transfert de matière entre le gaz et le liquide en amont de l'injection du mélange de gaz et de liquide en entrée d'un lit granulaire. Dans le cas de processus chimiques, ceci permet de favoriser le transfert de composés réactifs issus du gaz vers le liquide. Dans de tels processus chimiques dans lesquels la réaction s'effectue généralement dans le liquide, ce transfert de composés du gaz vers le liquide peut constituer un facteur limitant du processus réactionnel. L'invention permet d'augmenter ce transfert entre le gaz et le liquide, en favorisant ainsi la création de nuages de bulles homogènes à l'interface entre le gaz et le liquide.

Un autre objet de l'invention est de proposer un plateau de distribution d'un gaz et d'un liquide permettant d'éviter tout phénomène de bouillonnement instable ou localisé, ou de moussage qui pourrait être préjudiciable à l'uniformité de la distribution du gaz et du liquide à la surface du lit granulaire.

En plus des objets précédemment listés, l'invention permet de résoudre au moins le problème technique qui consiste à améliorer l'uniformité de la distribution d'un mélange comprenant un gaz et un liquide sur la surface supérieure du lit.

L'invention porte donc sur un dispositif pour le mélange et la répartition d'un gaz et d'un liquide disposé en amont d'un lit granulaire, comportant un plateau inférieur et un moyen d'amenée du gaz et du liquide doté d'un plateau supérieur, le plateau inférieur étant équipé d'une pluralité de cheminées, chacune des cheminées comportant une partie supérieure dotée d'au moins un orifice latéral et une partie inférieure communicant avec le dessous dudit plateau, le plateau supérieur étant, quant à lui, doté de moyens d'acheminement du liquide au niveau du plateau inférieur et de moyens de séparation et d'acheminement du gaz.

Dans un mode de réalisation, les moyens d'acheminement du liquide au niveau du plateau inférieur comportent des orifices répartis uniformément sur la surface dudit plateau supérieur.

Alternativement, ces moyens d'acheminement du liquide au niveau du plateau inférieur peuvent comporter au moins une conduite à travers le plateau supérieur dont les extrémités sont disposées de manière à être immergées dans le liquide accumulé au niveau du plateau inférieur, pour l'une des extrémités, et dans le liquide accumulé au niveau du plateau supérieur, pour l'autre.

Dans un autre mode de réalisation, les moyens de séparation et d'acheminement du gaz comportent des tubes ouverts à leurs extrémités disposés à travers le plateau supérieur et dont l'extrémité supérieure est coiffée d'un couvercle de manière à ne laisser passer que le gaz.

Dans encore un autre mode de réalisation, les moyens de séparation et d'acheminement du gaz au-dessous du plateau supérieur comportent une ouverture de forme annulaire disposée à la périphérie du plateau supérieur et dotée d'un rebord, et un couvercle recouvrant ladite ouverture de manière à ne laisser passer que le gaz.

La description et les figures présentées ci-après permettent d'illustrer plus clairement les modes de réalisation du dispositif de invention et font apparaître l'ensemble des avantages associés à la mise en oeuvre de ce dispositif.

### Brève description des figures

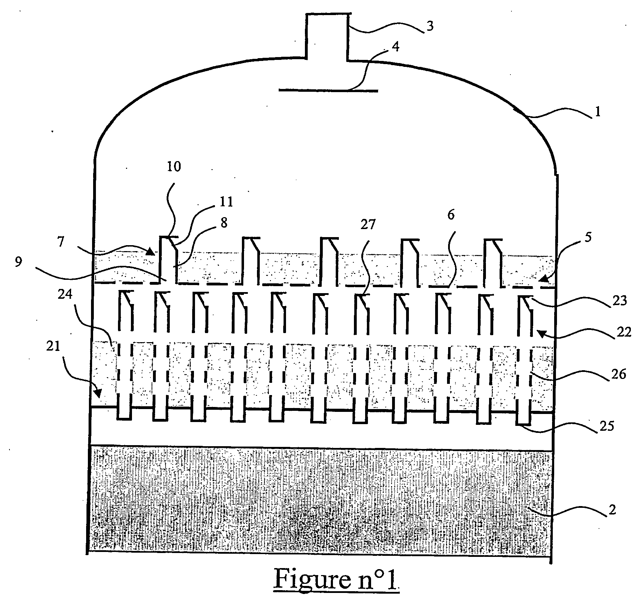

La Figure 1 illustre, de manière non limitative, un mode de réalisation d'un dispositif non conforme à l'invention dans lequel les moyens d'acheminement du liquide au niveau du plateau inférieur comportent des orifices répartis uniformément sur la surface dudit plateau supérieur et les moyens de séparation et d'acheminement du gaz comportent des tubes ouverts à leurs extrémités, disposés à travers le plateau supérieur, et dont l'extrémité supérieure est coiffée d'un couvercle de manière à ne laisser passer que le gaz.

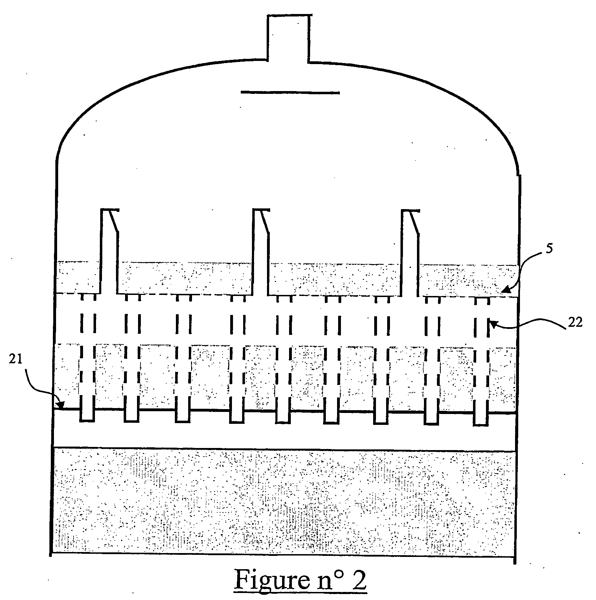

La Figure 2 illustre, de manière non limitative, un autre mode de réalisation du dispositif de l'invention dans lequel les cheminées du plateau inférieur font office de support du plateau supérieur.

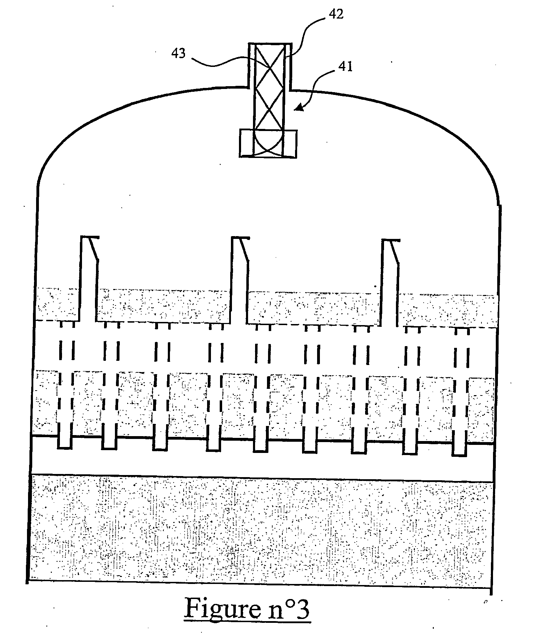

La Figure 3 illustre, de manière non limitative, un autre mode de réalisation du dispositif de l'invention dans lequel le moyen d'amenée du gaz et du liquide comporte un moyen de séparation supplémentaire en amont du plateau supérieur.

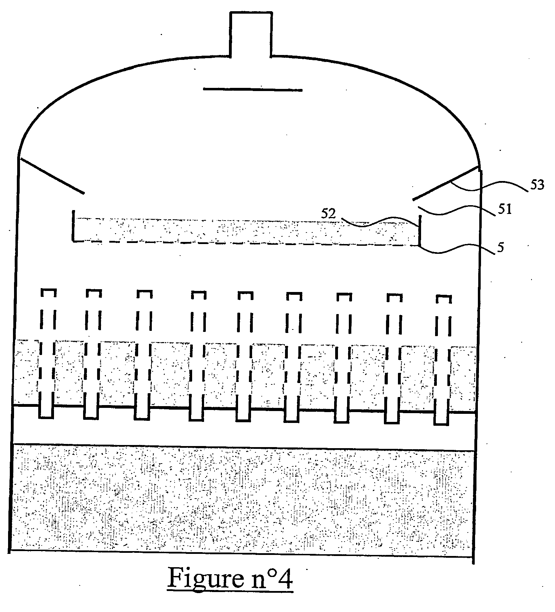

La Figure 4 illustre, de manière non limitative, un mode de réalisation non conforme à l'invention dans lequel les moyens de séparation et d'acheminement du gaz au-dessous du plateau supérieur comportent une ouverture de forme annulaire disposée à la périphérie du plateau supérieur et dotée d'un rebord, et un couvercle recouvrant ladite ouverture de manière à ne laisser passer que le gaz.

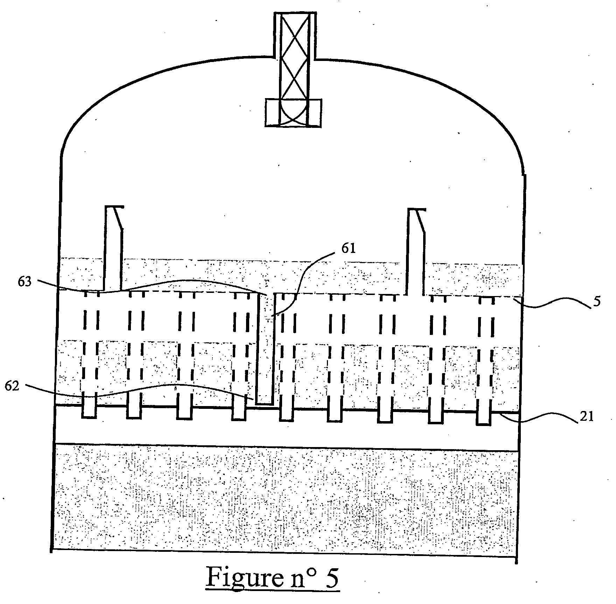

La Figure 5 illustre, de manière non limitative, un mode de réalisation dans lequel les moyens d'acheminement du liquide au niveau du plateau inférieur peuvent comporter au moins une conduite à travers le plateau supérieur dont les extrémités sont disposées de manière à être immergées dans le liquide accumulé au niveau du plateau inférieur, pour l'une des extrémités, et dans le liquide accumulé au niveau du plateau supérieur, pour l'autre.

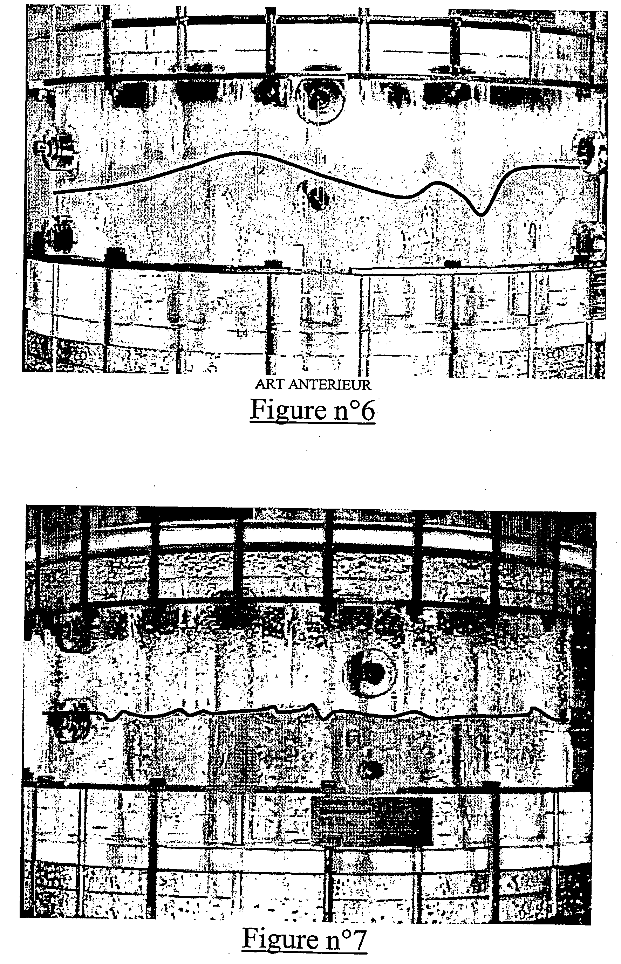

Les Figures 6 et 7 sont associées aux exemples présentés ci-après, et représentent des photographies permettant de visualiser l'interface entre le gaz et le liquide au niveau du plateau inférieur de maquettes d'un dispositif de type standard (art antérieur), d'une part, et d'un dispositif selon l'invention, d'autre part.

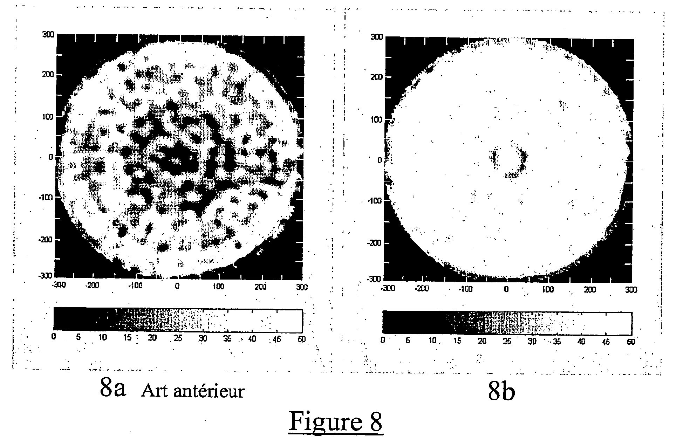

Les Figures 8.a et 8.b sont associées aux exemples présentés ci-après, et représentent les distributions de taux de gaz mesurées sur une section du lit granulaire en aval du dispositif de type standard (art antérieur), d'une part, et du dispositif selon l'invention, d'autre part.

### Description détaillée de l'invention

L'invention porte donc sur un dispositif pour le mélange et la répartition d'un gaz et d'un liquide disposé en amont d'un lit granulaire, comportant un moyen d'amenée du gaz et du liquide, et un plateau inférieur sensiblement horizontal, ledit plateau inférieur étant équipé d'une pluralité de cheminées réparties uniformément sur la surface dudit plateau, chacune des cheminées comportant une partie supérieure et une extrémité inférieure communiquant avec le dessous dudit plateau, la partie supérieure des cheminées étant dotée d'au moins un orifice latéral.

L'amélioration apportée par la présente invention est que le moyen d'amenée comprend un plateau supérieur sensiblement horizontal, au-dessus duquel est alimenté le gaz et le liquide, ledit plateau étant doté de moyens d'acheminement du liquide au niveau du plateau inférieur et de moyens de séparation et d'acheminement du gaz.

Par lits granulaires, on entend généralement un ensemble de particules solides ayant la forme de grains, ces grains pouvant avoir une forme quelconque mais le plus souvent approximativement cylindrique ou sphérique, et ayant des dimensions typiques de l'ordre de quelques millimètres. Ces solides granulaires présentent généralement une activité catalytique.

Généralement, le dispositif de l'invention est intégré dans un réacteur pouvant contenir un ou plusieurs lits granulaires. Ces lits sont souvent fixes, et peuvent être successifs et/ou séparés entre eux.

L'invention est particulièrement adaptée pour être mise en oeuvre dans un réacteur à écoulement co-courant descendant de liquide et de gaz, à travers le ou les lits fixes de solides granulaires.

Le dispositif de l'invention peut être disposé en amont d'un lit granulaire, entre deux lits granulaires successifs ou, de manière générale, en tête d'un réacteur alimenté par au moins un liquide et un gaz.

Le dispositif de l'invention comporte principalement deux groupes de moyens, à savoir un moyen d'amenée du gaz et du liquide, et un plateau inférieur sensiblement horizontal.

Selon un aspect de la présente invention, le moyen d'amenée du gaz et du liquide comprend un plateau supérieur sensiblement horizontal, au-dessus duquel est alimenté le gaz et le liquide. Ce plateau supérieur couvre généralement toute la section de l'enceinte réactionnelle ou du réacteur.

Selon un autre aspect de l'invention, le plateau supérieur du moyen d'amenée du gaz et du liquide est doté de moyens d'acheminement du liquide au niveau du plateau inférieur.

Dans un mode de réalisation concernant cet aspect de l'invention, les moyens d'acheminement du liquide au niveau du plateau inférieur comportent des orifices répartis uniformément sur la surface dudit plateau. Ces orifices sont généralement dédiés au passage du liquide qui s'est accumulé sur le plateau supérieur. Ainsi le liquide peut passer au-dessous du plateau supérieur, c'est à dire vers le plateau inférieur.

De préférence, la densité des orifices du plateau supérieur est comprise entre de 100 à 3000, de manière plus préférée entre 500 et 3000 orifices par m².

Le diamètre des orifices du plateau supérieur est, de préférence, compris entre 1 à 20 mm, de manière plus préférée entre 5 et 10 mm.

Dans un autre mode de réalisation, les moyens d'acheminement du liquide au niveau du plateau inférieur comportent au moins une conduite à travers le plateau supérieur dont les extrémités sont disposées de manière à être immergées dans le liquide accumulé au niveau du plateau inférieur, pour l'une des extrémités, et dans le liquide accumulé au niveau du plateau supérieur, pour l'autre.

L'extrémité supérieure de la conduite peut être disposée, de préférence à une hauteur inférieure à 50 mm, de manière plus préférée à ras, par rapport à la surface supérieure du plateau supérieure.

Cette disposition de l'extrémité supérieure permet de ne laisser passer que le liquide.

L'extrémité inférieure de la conduite est disposée, de préférence, à une hauteur inférieure au niveau le plus bas de l'orifice latéral le plus bas des cheminées du plateau inférieur.

Cette disposition de l'extrémité inférieure permet d'introduire le liquide au niveau du plateau inférieur sans venir perturber la surface du liquide accumulé au niveau dudit plateau.

La conduite peut, de préférence, comporter des moyens de régulation du niveau de liquide dans le plateau supérieur. Ces moyens peuvent être tout moyen connu de l'homme du métier permettant notamment de générer une perte de charge, tels que, par exemples, des orifices calibrés, des tubulures convergentes ou divergentes.

Selon encore un autre aspect de l'invention, le plateau supérieur du moyen d'amenée du gaz et du liquide est doté de moyens de séparation et d'acheminement du gaz au-dessous dudit plateau supérieur. Ces moyens présentent ainsi une double fonction qui est de séparer le gaz du liquide, d'une part, et d'acheminer le gaz au-dessous du plateau plateaux supérieur, d'autre part.

Dans un mode préféré concernant cet aspect de l'invention, les moyens de séparation et d'acheminement du gaz comportent des tubes ouverts à leurs extrémités disposés à travers le plateau supérieur et dont l'extrémité supérieure est coiffée d'un couvercle de manière à ne laisser passer que le gaz.

Alternativement, les moyens de séparation et d'acheminement du gaz comportent des tubes ayant une extrémité supérieure fermée et une extrémité inférieure ouverte, lesdites cheminés étant disposées à travers le plateau supérieur et possédant une ouverture latérale en partie haute.

Dans ces deux cas de figures, la densité des tubes du plateau supérieur peut être, de préférence, comprise entre 3 et 30, de manière plus préférée entre 5 et 500 cheminées par m2.

Dans un autre mode préféré de l'invention, les moyens de séparation et d'acheminement du gaz comportent une ouverture de forme annulaire disposée à la périphérie du plateau supérieur et dotée d'un rebord, et un couvercle recouvrant ladite ouverture de manière à ne laisser passer que le gaz.

Ce plateau supérieur est généralement utilisé pour séparer l'écoulement de gaz et de liquide issu des conduits d'alimentations du réacteur. Sa configuration permet souvent d'établir un niveau liquide suffisant pour permettre le désengagement du gaz entraîné dans la phase liquide par l'impaction des jets de gaz et de liquide issus de l'entrée de l'enceinte.

Ainsi, l'alimentation du gaz et du liquide dans le plateau inférieur est réalisée de manière séparée, le liquide étant injecté au travers des orifices situés sur le plateau supérieur et le gaz étant injecté au travers des moyens de séparation et d'acheminement dudit gaz.

En plus du moyen d'amenée du gaz et du liquide incluant le plateau supérieur précédemment décrit, le dispositif de l'invention comporte un plateau inférieur sensiblement horizontal.

De la même façon que le plateau supérieur, ce plateau inférieur couvre généralement toute la section de l'enceinte réactionnelle ou du réacteur.

Selon l'invention, ce plateau inférieur est équipé d'une pluralité de cheminées réparties uniformément sur la surface dudit plateau inférieur, chacune des cheminées comportant une partie supérieure et une partie inférieure communicant avec le dessous dudit plateau. Ces cheminées sont généralement sensiblement verticales. Elles présentent souvent une section constante.

La densité des cheminées du plateau inférieur peut aller, de préférence, de 100 à 700, de manière plus préférée de 150 à 500 cheminées par m2.

De préférence, les cheminées du plateau inférieur sont prolongées au-dessous dudit plateau sur une hauteur comprise entre 10 et 100 mm. Cette configuration permet d'éviter le ruissellement du liquide sur la face inférieure du plateau inférieur.

De préférence, la distance entre l'extrémité inférieure des cheminées du plateau inférieur et la surface supérieur du lit granulaire au-dessous dudit plateau est supérieure à zéro et inférieure ou égale à 300 mm, de manière plus préférée inférieure ou égale à 100 mm. Cette configuration permet de maintenir une bonne distribution entre le gaz et le liquide dans les couches supérieures du lit granulaires.

Selon l'invention, la partie supérieure des cheminées est dotée d'au moins un orifice latéral. De préférence, la partie supérieure des cheminées est dotée d'une pluralité d'orifices latéraux situés à différentes hauteurs.

Les orifices latéraux le long de la partie supérieure des cheminées du plateau inférieur sont, de préférence, répartis sur au moins deux niveaux, le niveau le plus bas étant situé au-dessus de la face supérieure du plateau inférieure, à une distance comprise entre 50 et 300 mm par rapport à l'extrémité inférieur des cheminées. Le ou les niveaux d'orifices latéraux peuvent, quant à eux, être séparés d'une hauteur d'au moins 20 mm. Ainsi, le dispositif de l'invention permet une très grande flexibilité par rapport aux variations de débits.

De préférence, les cheminées comportent, à leur extrémité supérieure, des moyens permettant d'éviter tout passage du liquide par cette extrémité. Ces moyens peuvent être, par exemple, un couvercle.

Le plateau inférieur est généralement destiné à accumuler un certain volume de liquide. La partie supérieure de chaque cheminée, communiquant avec la partie du réacteur au-dessus du plateau inférieur, débouche généralement au-dessus du niveau de liquide accumulé sur ce même plateau inférieur. Le passage du gaz et du liquide au-dessous du plateau inférieur se fait à travers le ou les orifices latéraux dans la partie supérieure des cheminées.

Le gaz et le liquide étant injectés de manière séparée au-dessus du plateau inférieur, une interface plane s'établit entre ces deux fluides. Le liquide est avantageusement injecté par l'intermédiaire d'un grand nombre d'orifices sous forme de jets liquides de faibles débits, ce qui permet de limiter les perturbations de l'interface entre le liquide et le gaz. De surcroît, la distribution du débit de liquide est uniforme sur toute la section du plateau supérieur.

Le dispositif de l'invention permet ainsi de maintenir l'interface entre le liquide et le gaz plane et horizontale, de manière à mieux contrôler une alimentation homogène des différentes cheminées du plateau inférieur, par chacun des deux fluides.

La majeure partie du gaz est introduite dans les cheminées du plateau inférieur, par les orifices latéraux situés dans la portion non immergée de la partie supérieure desdites cheminées. Le liquide est, quant à lui, introduit par les orifices latéraux situés dans la partie immergée de la partie supérieure des cheminées.

Le dispositif de l'invention permet, grâce au plateau inférieur combiné aux moyens d'amenée de gaz et de liquide, d'éviter les phénomènes de bouillonnement ou de moussage qui pourraient apparaître dans le liquide et venir perturber l'alimentation homogène des cheminées.

Plus précisément, le liquide alimenté par les moyens d'amenée dans les cheminées du plateau inférieur se retrouve généralement dans un état physique homogène et identique d'une cheminée à l'autre. Le dispositif de l'invention permet donc d'éviter que ce liquide se retrouve dans les cheminées du plateau inférieur dans un état plus ou moins aéré par la présence d'une partie du gaz dans le liquide sous forme d'une émulsion ou de très fines bulles, comme cela est possible lorsque l'interface entre les deux fluides est fortement perturbée.

Le dispositif de l'invention décrit précédemment s'applique à tout type de réacteurs comportant au moins un lit granulaire. Il peut s'appliquer, en particulier, à des réacteurs pour lesquels les flux de liquide à distribuer sont compris entre 0,5 et 100 kg/m2/s ou, plus habituellement, compris entre 1 et 80 kg/m2/s.

Le dispositif de l'invention peut trouver une application dans tous les cas où le gaz est minoritaire par rapport au liquide, c'est-à-dire dans les cas où le rapport volumique entre le gaz et le liquide est inférieur à 1. Le dispositif de l'invention peut également être utilisé lorsque le gaz est largement majoritaire par rapport au liquide, c'est-à-dire lorsque le rapport volumique entre le débit gaz et le débit liquide est supérieur à 3/1 ou, plus habituellement, inférieur à 400/1. Le domaine d'utilisation du dispositif de l'invention peut donc s'étendre à des rapports volumiques entre le gaz et le liquide compris entre 0 et 400, et avantageusement compris entre 0 et 100.

Le dispositif de l'invention peut s'appliquer également dans les cas où la réaction au sein du lit granulaire est fortement exothermique et nécessite l'introduction dans le réacteur d'un fluide supplémentaire, le plus souvent gazeux, afin de refroidir le mélange de gaz et de liquide.

Le dispositif de l'invention peut s'appliquer également dans les cas où la réaction au sein du lit granulaire nécessite un contact étroit pour permettre la dissolution d'un composé le plus souvent gazeux, par exemple de l'hydrogène H2, dans la phase liquide. Le dispositif de l'invention s'applique, en particulier, dans le domaine des distributeurs de gaz et de liquide, comme par exemple ceux employés pour la mise en oeuvre des réactions d'hydrotraitement. Parmi ces réactions d'hydrotraitement on peut citer l'hydrocraquage, l'hydrodésulfuration, l'hydrodéazotation, l'hydrogénations sélectives ou totales des coupes C2 à C5. Le dispositif de l'invention peut s'appliquer également aux cas de l'hydrogénation sélective des essences de vapocraquage, de l'hydrogénation des composés aromatiques dans des coupes aliphatiques et/ou naphténiques, et de l'hydrogénation des oléfines dans des coupes aromatiques.

Le dispositif de l'invention peut trouver aussi son application pour mettre en oeuvre d'autres réactions nécessitant un bon mélange d'une phase gazeuse et d'une phase liquide, par exemple les réactions d'oxydation partielle ou totale, les réactions d'amination, d'acétyloxydation, d'ammoxydation et d'halogénation en particulier de chloration.

Dans le domaine spécifique des réactions d'hydrodésulfuration, d'hydrodéazotation, d'hydrocraquage et, particulièrement lorsqu'on désire atteindre des conversions poussées pour obtenir un produit contenant par exemple moins de 30 ppm (parties par million) de soufre, le dispostif de l'invention est particulièrement bien adapté. En effet, dans ces cas, il est nécessaire d'avoir une bonne distribution du gaz et du liquide, mais principalement du liquide, sachant que l'on se situe avec des rapports volumétriques du gaz sur le liquide qui varient en général d'environ 3/1 à environ 400/1, et le plus souvent d'environ 10/1 à environ 200/1.

Le dispositif de l'invention est également particulièrement bien adapté dans le cas de l'utilisation d'un fluide auxiliaire de refroidissement, plus communément appelé « quench » dans la terminologie anglo-saxonne, où un très bon contact entre ce fluide auxiliaire introduit pour effectuer le refroidissement, et les fluides du procédé, souvent dénommés fluides process, est nécessaire.

### Description détaillée des figures

Pour une meilleure compréhension, plusieurs modes de réalisation du dispositif de l'invention sont illustrés par les Figures 2, 3 et 5. Ces modes de réalisation sont donnés à titre d'exemples et ne présentent aucun caractère limitatif. Ces illustrations du dispositif de l'invention ne comportent pas l'ensemble des composantes nécessaires à sa mise en oeuvre. Seuls les éléments nécessaires à la compréhension de l'invention y sont représentés, l'homme du métier étant capable de compléter ces représentations pour réaliser et mettre en oeuvre l'invention.

La Figure 1 représente un mode de réalisation dans lequel l'écoulement du gaz et du liquide est descendant. Les moyens d'amenée de ces fluides comportent, au sommet d'un réacteur 1 comportant un lit granulaire 2, un conduit vertical d'alimentation 3.

Ces moyens d'amenée comportent également une plaque plane 4 ayant pour fonctions de dissiper l'énergie cinétique du jet et de répartir le mélange de gaz et de liquide sur au moins une fraction de la section du réacteur 1. Le jet de gaz et de liquide issu du conduit d'alimentation 3 vient donc impacter la plaque 4.

Les moyens d'amenée du gaz et du liquide comprennent, en outre, un plateau supérieur 5 destiné à recevoir le mélange de gaz et de liquide après l'impact sur la plaque 4. Ce plateau supérieur comporte des orifices 6 dédiés au passage du liquide, ainsi que des moyens 7 de séparation et d'acheminement du gaz. Dans le mode de réalisation représenté, les moyens 7 de séparation et d'acheminement du gaz comportent des tubes 8 ouverts à leurs extrémités supérieures et leurs extrémités inférieures 9, et disposés à travers le plateau supérieur 5. L'extrémité supérieure de chacun de ces tubes est coiffée d'un couvercle 10, de manière à ne laisser passer que le gaz. Dans le mode de réalisation représenté, le passage du gaz est réalisé par l'intermédiaire d'une ouverture créée par le biseautage 11 de l'extrémité supérieure des tubes 8.

Le nombre et le diamètre des orifices sont souvent calculés de façon à assurer le maintien d'un niveau liquide au-dessus du plateau généralement d'au moins 50 mm, avantageusement d'au moins 100 mm. Le nombre d'orifices peut également être choisi afin de respecter une densité d'au moins 100 orifices par m², avantageusement entre 100 et 500 orifices par m². De cette façon l'écoulement au travers des orifices est essentiellement composé de liquide venant alimenter le plateau inférieur, sous forme de jets ayant un faible débit. La hauteur des cheminées est généralement déterminée de manière à éviter tout débordement du liquide par ces cheminées quand lé débit liquide est maximum.

Le gaz et le liquide issus du plateau supérieur 5, viennent ensuite alimenter un plateau inférieur 21. Le liquide est alimenté par ruissellement. Le plateau inférieur 21 comporte des cheminées 22, chacune de ces cheminées comportant une partie supérieure 23 débouchant au-dessus de la surface 24 du liquide et une extrémité inférieure 25 communicant avec le dessous dudit plateau. La partie supérieure des cheminées est dotée d'une pluralité d'orifices latéraux 26 situés à différentes hauteurs. Les cheminées 22 du plateau inférieur 21 sont fermées au niveau de leurs extrémités supérieures par un couvercle 27. Ainsi, lorsque des orifices 6 du plateau supérieur 5 sont situés au-dessus des cheminées, le liquide ruisselle le long des parois des cheminées sans y pénétrer autrement que par les orifices latéraux 26. Le couvercle 27 recouvrant l'extrémité supérieure des cheminées 22 peut être inclinée afin de favoriser le ruissellement dans la direction opposée à celle des orifices dédiés plus particulièrement au passage du gaz.

Les jets liquides issus des orifices 6 du plateau supérieur 5 présentent de faibles débits et sont répartis sur toute la section du réacteur. De ce fait, les perturbations de l'interface entre le gaz et le liquide située au-dessus du plateau inférieur 21 sont de faibles amplitudes et sont surtout réparties de façon homogène sur toute la section du réacteur. Ainsi, la composition de la phase liquide et les débits de liquide qui alimentent les orifices latéraux des cheminées qui sont immergés sont identiques pour toutes les cheminées. De la même façon, l'évolution du niveau moyen de la surface de liquide au cours du temps, par rapport aux orifices latéraux de ces cheminées, est identique d'une cheminée à l'autre. Ainsi, le système assure une bonne homogénéité de la composition des mélanges de gaz et de liquide, d'une part, et de l'uniformité du débit de ces fluides sur la section du réacteur.

La Figure 2 représente un mode de réalisation dans lequel les deux plateaux 5 et 21 sont solidaires, le plateau supérieur 5 étant directement supporté sur l'extrémité supérieure des cheminées 22 du plateau inférieur 21. De cette façon, le plateau supérieur obture l'extrémité supérieure des cheminées et permet de minimiser la hauteur de chute du liquide entre le plateau supérieur 5 et le plateau inférieur 21. Le gaz est alors majoritairement injecté dans les cheminées 22 du plateau inférieur 21 par l'intermédiaire d'un ou plusieurs orifices situés dans la portion non immergée des cheminées 22.

La Figure 3 représente un mode de réalisation dans lequel un système de séparation supplémentaire 41 est ajouté aux moyens d'amenée du gaz et du liquide. Ce système est, en l'occurrence, situé dans le conduit vertical d'alimentation 3 à l'entrée du réacteur.

Ce système de séparation 41 comporte un tube 42 dans lequel est introduit une hélice 43. Cette hélice impose un mouvement circulaire à l'écoulement pour permettre la séparation du gaz et du liquide par force centrifuge. En sortie de ce tube 42, le gaz et le liquide sont évacués par deux ouvertures, non représentées, situé à l'opposé l'une de l'autre sur les parois cylindriques du tube 42. Ainsi, le gaz et le liquide sont préalablement séparés, le liquide s'écoulant sous forme d'un film sur la paroi extérieure des sorties tangentielle et le gaz étant évacué par les sections situées vers l'axe du tube séparateur. Dans le cas où le mélange serait, à l'entrée du réacteur, sous forme d'un brouillard de gouttelettes ou d'un écoulement à bulles le pré-séparateur améliore l'efficacité de séparation du gaz du liquide au niveau du plateau supérieur.

La Figure 4 représente un mode de réalisation dans lequel les moyens de séparation et d'acheminement du gaz au-dessous du plateau supérieur comportent une ouverture 51 de forme annulaire disposée à la périphérie du plateau supérieur 5 et dotée d'un rebord 52, et un couvercle 53 recouvrant ladite ouverture de manière à ne laisser passer que le gaz.

La surface du plateau supérieur 5 délimitée par le rebord 52 couvre plus de 25%, de préférence plus de 50% et moins de 90% de la section du lit granulaire. La hauteur du rebord est calculée de façon à maintenir le niveau liquide entre un niveau minimum correspondant au débit liquide minimum et un niveau maximum correspond au débit liquide maximum. Le niveau minimum est généralement d'au moins 50 mm, de préférence d'au moins 100 mm.

Le couvercle 53 présente, de préférence, la forme d'une paroi en tronc de cône inversé permettant de collecter la totalité du liquide au niveau de la partie du plateau supérieur 5 limitée par le rebord 52.

La Figure 5 représente un mode de réalisation dans lequel les moyens d'acheminement du liquide au niveau du plateau inférieur peuvent comporter au moins une conduite 61 à travers le plateau supérieur 5 dont les extrémités 62 et 63 sont disposées de manière à être immergées dans le liquide accumulé au niveau du plateau inférieur 21, pour l'extrémité 62, et dans le liquide accumulé au niveau du plateau supérieur, pour l'extrémité 63.

Le nombre et le diamètre de ces conduites 61 (seulement une est représentée) sont calculés de façon à assurer un niveau minimum de liquide au dessus du plateau supérieur pour un débit liquide minimum. Ce niveau minimum permet notamment d'éviter l'entraînement de gaz vers le plateau inférieur. Ce niveau est généralement d'au moins 50 mm, de préférence d'au moins 100 mm.

L'extrémité inférieure 62 des conduites 61 est généralement située au-dessous de l'orifice latéral le plus bas des cheminées 22 du plateau inférieur 21. Dans cette configuration, les conduites 61 sont toujours remplis de liquide et le liquide issu du plateau supérieur ne vient pas impacter sur l'interface entre le gaz et le liquide du plateau inférieur puisqu'il est directement injecté au-dessous du niveau de liquide du plateau inférieur. Cette interface reste donc totalement plane quelque soient les débits de liquide et de gaz.

### Exemples

Les exemples présentés ci-dessous permettent d'illustrer les avantages d'un plateau de distribution selon l'invention par rapport à un plateau de distribution standard. Ces exemples ont été réalisés sur la base d'expérimentation sur des maquettes représentant un dispositif de type standard (art antérieur), d'une part, et un dispositif selon l'invention, d'autre part. Ces maquettes ont été mise en oeuvre dans un réacteur de 600 mm de diamètre dont les parois sont transparentes et comportant un lit granulaire. Les fluides utilisés étaient de l'eau et de l'air.

La maquette du dispositif de type standard comporte un plateau équipé de cheminées, lesdites cheminées disposant d'une partie supérieure débouchant au-dessus du plateau et d'une extrémité inférieure communiquant avec le dessous du plateau, la partie supérieure des cheminées étant dotée d'orifices latéraux. Dans ce dispositif, le liquide est amené par un système tubulaire depuis l'extérieur du réacteur sur le plateau de distribution, de manière à ce que l'extrémité inférieure dudit système tubulaire reste immergée dans le liquide accumulé au-dessus dudit plateau. L'extrémité inférieure du système tubulaire est prolongée par des tubes perforés immergés dans le liquide accumulé dans le plateau.

La maquette du dispositif selon l'invention correspond au dispositif représenté à la Figure 2. Le plateau supérieur présente 3 moyens de séparation et d'acheminement du gaz, en l'occurrence des tubes ouverts à leurs extrémités coiffés d'un couvercle. Le plateau supérieur est doté de moyen d'acheminement du liquide, en l'occurrence des orifices de diamètre 5 mm. Le plateau inférieur présente, quant à lui, 19 cheminées de diamètre 25 mm, chacune desdites cheminées présentant trois rangées d'orifices latéraux.

Les caractéristiques des cheminées du plateau inférieur de la maquette du dispositif standard sont les mêmes que celles de la maquette du dispositif de l'invention, c'est à dire 19 cheminées de diamètre 25 mm, chacune desdites cheminées présentant trois rangées d'orifices latéraux.

Dans les deux cas, le flux de liquide (eau) et le flux de gaz (air) ont été approximativement maintenus respectivement à 10 kg/m2/s et 0,023 kg/m2/s.

Les Figures 6 et 7 représentent des photographies permettant de visualiser l'interface entre le gaz et le liquide au niveau du plateau inférieur de maquettes d'un dispositif de type standard (art antérieur), pour la Figure 6, et d'un dispositif selon l'invention, pour la Figure 7.

Dans le cas du dispositif standard, les fluctuations de l'interface entre le gaz et le liquide, représentées sur la Figure 6, sont de l'ordre de 50 mm. Ces fluctuations engendrent un écoulement aléatoire du liquide au niveau des cheminées. La hauteur des fluctuations étant du même ordre de grandeur que l'écart entre deux orifices successifs sur les cheminées, les cheminées ne fonctionnent pas toutes avec le même nombre d'orifices. Ces fluctuations impliquent des déséquilibres de débit liquide.

Dans le cas du dispositif correspondant à l'invention, les fluctuations de l'interface entre le gaz et le liquide sur le plateau inférieur, représentées sur la Figure 7, sont de l'ordre de 5 mm, soit 10 fois moins importantes que dans le système standard. On peut constater que le niveau liquide est le même à l'amont de toutes les cheminées. De plus, compte tenu que les nuages de bulles créés au niveau de l'interface sont réparties de façon homogène sur toute la section de la colonne, le contact entre le gaz et le liquide est homogène sur toute la section et le débit de liquide injecté est le même d'une cheminée à l'autre.

Les Figures 8.a et 8.b représentent les distributions de taux de gaz mesurées sur une section du lit granulaire en aval du dispositif de type standard (art antérieur), pour la Figure 8.a, et du dispositif selon l'invention, pour la Figure 8.b. L'échelle au-dessous de chacune de ces figures représente l'étendu de la variation du taux de gaz, allant du noir pour 100% de liquide au blanc pour 100% de gaz.

Comme on peut le constater sur les Figures 8.a et 8.b, la distribution du taux de gaz est homogène sur toute la section dans le cas du dispositif de l'invention, alors que l'on observe une zone présentant un déficit de gaz au centre de la section du lit en aval du dispositif standard.

Dans le cas du dispositif standard, les fluctuations de l'interface entre le gaz et le liquide en périphérie du lit sont dues à l'impact du jet gaz/liquide issu du diffuseur d'entrée, ce qui génère une meilleure alimentation en gaz des cheminées situées en périphérie de la colonne. Si l'on définit un critère d'efficacité de distribution comme étant le pourcentage de pixels de l'image pour lesquels le taux de gaz mesuré est égal au taux de gaz attendu à +/- 10%, l'efficacité de distribution est de 79% pour le dispositif standard et de 96% pour le dispositif selon l'invention, ce qui correspond à un gain de 17% de la fraction de la section du lit qui est correctement irriguée par le mélange gaz/liquide.

## Revendications

1. Dispositif pour le mélange et la répartition d'un gaz et d'un liquide apte à être disposé en amont d'un lit granulaire (2), comportant: un plateau inférieur (21) sensiblement horizontal, ledit plateau inférieur étant équipé d'une pluralité de cheminées (22) réparties uniformément sur la surface dudit plateau, chacune des cheminées comportant une partie supérieure (23) et une extrémité inférieure (25) communiquant avec le dessous dudit plateau, la partie supérieure (23) des cheminées (22) étant dotée d'au moins un orifice latéral (26), un plateau supérieur (5) sensiblement horizontal doté de moyens d'acheminement du liquide au niveau du plateau inférieur et de moyens (7) pour séparer le gaz du liquide et d'acheminement du gaz au dessous du plateau supérieur, **caractérisé en ce que** ledit plateau supérieur (5) est solidaire et directement supporté sur l'extrémité supérieure des cheminées (22) du plateau inférieur (21) de manière à obturer l'extrémité supérieure des cheminées.

2. Dispositif selon la revendication 1, dans lequel les moyens d'acheminement du liquide au niveau du plateau inférieur (21) comportent des orifices (6) répartis sur la surface dudit plateau.

3. Dispositif selon la revendication 2, dans lequel la densité des orifices (6) du plateau supérieur est comprise entre de 100 à 3000 orifices par m².

4. Dispositif selon l'une quelconque des revendications 2 et 3, dans lequel le diamètre des orifices (6) du plateau supérieur est compris entre 1 à 20 mm.

5. Dispositif selon l'une quelconque des revendications 1 à 4, dans lequel les moyens d'acheminement du liquide au niveau du plateau inférieur comportent au moins une conduite (61) dont les extrémités (62, 63) sont disposées de manière à être immergées dans le liquide accumulé au niveau du plateau inférieur, pour l'une des extrémités (62), et dans le liquide accumulé au niveau du plateau supérieur, pour l'autre (63).

6. Dispositif selon la revendication 5, dans lequel l'extrémité supérieure (63) de la conduite (61) est disposée à une hauteur inférieure à 50 mm, par rapport à la surface supérieure du plateau supérieure (5).

7. Dispositif selon l'une quelconque des revendications 5 ou 6, dans lequel l'extrémité inférieure (62) de la conduite (61) est disposée à une hauteur inférieure au niveau le plus bas de l'orifice latéral (26) le plus bas des cheminées (22) du plateau inférieur (21).

8. Dispositif selon l'une quelconque des revendications 5 à 7, dans lequel la conduite (61) comporte des moyens de régulation du niveau de liquide dans le plateau supérieur (5).

9. Dispositif selon l'une quelconque des revendications 1 à 8, dans lequel les moyens (7) de séparation et d'acheminement du gaz comportent des tubes ouverts (8) à leurs extrémités disposés à travers le plateau supérieur (5) et dont l'extrémité supérieure est coiffée d'un couvercle (10) de manière à ne laisser passer que le gaz.

10. Dispositif selon la revendication 9, dans lequel la densité des tubes (8) du plateau supérieur est comprise entre 3 et 30 cheminées par m².

11. Dispositif selon l'une quelconque des revendications 1 à 10, dans lequel les moyens (7) de séparation et d'acheminement du gaz comportent une ouverture (51) disposée à la périphérie du plateau supérieur (5) et dotée d'un rebord (52), et un couvercle (53) recouvrant ladite ouverture de manière à ne laisser passer que le gaz.

12. Dispositif selon l'une quelconque des revendications 1 à 11, dans lequel la densité des cheminées (22) du plateau inférieur (21) est comprise entre 100 et 700 cheminées par m².

13. Dispositif selon l'une quelconque des revendications 1 à 12, dans lequel les cheminées (22) du plateau inférieur (21) sont prolongées au-dessous dudit plateau sur une hauteur comprise entre 10 et 100 mm.

14. Dispositif selon l'une quelconque des revendications 1 à 13, dans lequel la distance entre l'extrémité inférieure (25) des cheminées (22) du plateau inférieur (21) et la surface supérieur du lit granulaire (2) au-dessous dudit plateau est supérieure à zéro et inférieure ou égale à 300 mm.

15. Dispositif selon l'une quelconque des revendications 1 à 14, dans lequel la partie supérieure (23) des cheminées (22) est dotée d'une pluralité d'orifices latéraux (26) situés à différentes hauteurs.

16. Dispositif selon la revendication 15, dans lequel les orifices latéraux (26) le long de la partie supérieure (23) des cheminées (22) du plateau inférieur (21) sont répartis sur au moins deux niveaux, le niveau le plus bas étant situé au-dessus de la face supérieure du plateau inférieure (21), à une distance comprise entre 50 et 300 mm par rapport à l'extrémité inférieur (25) des cheminées.

## Patentansprüche

1. Vorrichtung zum Mischen und Verteilen eines Gases und einer Flüssigkeit, die geeignet ist, vor einer Granulatschüttung (2) angeordnet zu werden, umfassend: einen im Wesentlichen horizontalen unteren Boden (21), wobei der untere Boden mit einer Vielzahl von Kaminen (22) ausgestattet ist, die gleichmäßig auf der Oberfläche des Bodens verteilt sind, wobei jeder der Kamine einen oberen Teil (23) und ein unteres Ende (25), das mit der Unterseite des Bodens kommuniziert, umfasst, wobei der obere Teil (23) der Kamine (22) mit mindestens einer seitlichen Öffnung (26) versehen ist, einen im Wesentlichen horizontalen oberen Boden (5), der mit Mitteln zum Transportieren der Flüssigkeit in Höhe des unteren Bodens und Mitteln (7) zum Trennen des Gases und der Flüssigkeit und zum Transportieren des Gases unter dem oberen Boden versehen ist, **dadurch gekennzeichnet, dass** der obere Boden (5) fest verbunden ist mit und direkt auf dem oberen Ende der Kamine (22) des unteren Bodens (21) gelagert ist, um das oberen Ende der Kamine zu verschließen.

2. Vorrichtung nach Anspruch 1, wobei die Mittel zum Transportieren der Flüssigkeit in Höhe des unteren Bodens (21) Öffnungen (6) umfassen, die auf der Oberfläche des Bodens verteilt sind.

3. Vorrichtung nach Anspruch 2, wobei die Dichte der Öffnungen (6) des oberen Bodens im Bereich zwischen 100 bis 3.000 Öffnungen pro m² liegt.

4. Vorrichtung nach einem der Ansprüche 2 und 3, wobei der Durchmesser der Öffnungen (6) des oberen Bodens im Bereich zwischen 1 bis 20 mm liegt.

5. Vorrichtung nach einem der Ansprüche 1 bis 4, wobei die Mittel zum Transportieren der Flüssigkeit in Höhe des unteren Bodens mindestens eine Leitung (61) umfassen, deren Enden (62, 63) derart angeordnet sind, dass das eine Ende (62) in die Flüssigkeit getaucht ist, die sich in Höhe des unteren Bodens akkumuliert hat, und das andere Ende (63) in die Flüssigkeit getaucht ist, die sich in Höhe des oberen Bodens akkumuliert hat.

6. Vorrichtung nach Anspruch 5, wobei das obere Ende (63) der Leitung (61) in einer Höhe angeordnet ist, die, bezogen auf die Oberseite des oberen Bodens (5), kleiner als 50 mm ist.

7. Vorrichtung nach einem der Ansprüche 5 oder 6, wobei das untere Ende (62) der Leitung (61) in einer Höhe angeordnet ist, die unterhalb der Höhe der am weitesten unten gelegenen seitlichen Öffnung (26) des am weitesten unten gelegenen Kamins (22) des unteren Bodens (21) angeordnet ist.

8. Vorrichtung nach einem der Ansprüche 5 bis 7, wobei die Leitung (61) Mittel zur Regulierung des Flüssigkeitsniveaus im oberen Boden (5) umfasst.

9. Vorrichtung nach einem der Ansprüche 1 bis 8, wobei die Mittel (7) zum Trennen und zum Transportieren des Gases an ihren Enden offene Rohre (8) umfassen, die durch den oberen Boden (5) angeordnet sind und deren oberes Ende mit einem Deckel (10) abgedeckt ist, um nur das Gas durchzulassen.

10. Vorrichtung nach Anspruch 9, wobei die Dichte der Rohre (8) des oberen Bodens im Bereich zwischen 3 und 30 Kaminen pro m² liegt.

11. Vorrichtung nach einem der Ansprüche 1 bis 10, wobei die Mittel (7) zum Trennen und zum Transportieren des Gases eine Öffnung (51) umfassen, die am Rand des oberen Bodens (5) angeordnet ist und mit einem Dichtrand (52) und einer Abdeckung (53) versehen ist, die die Öffnung abdeckt, um nur das Gas durchzulassen.

12. Vorrichtung nach einem der Ansprüche 1 bis 11, wobei die Dichte der Kamine (22) des unteren Bodens (21) im Bereich zwischen 100 und 700 Kaminen pro m² liegt.

13. Vorrichtung nach einem der Ansprüche 1 bis 12, wobei die Kamine (22) des unteren Bodens (21) unterhalb des Bodens in einer Höhe im Bereich zwischen 10 und 100 mm verlängert sind.

14. Vorrichtung nach einem der Ansprüche 1 bis 13, wobei der Abstand zwischen dem unteren Ende (25) der Kamine (22) des unteren Bodens (21) und der Oberseite der Granulatschüttung (2) unterhalb des Bodens größer als null und kleiner oder gleich 300 mm ist.

15. Vorrichtung nach einem der Ansprüche 1 bis 14, wobei der obere Teil (23) der Kamine (22) mit einer Vielzahl von seitlichen Öffnungen (26) versehen ist, die in unterschiedlichen Höhen liegen.

16. Vorrichtung nach Anspruch 15, wobei die seitlichen Öffnungen (26) entlang des oberen Teils (23) der Kamine (22) des unteren Bodens (21) auf mindestens zwei Höhen verteilt sind, wobei die unterste Höhe über der oberen Seite des unteren Bodens (21), bezogen auf das untere Ende (25) der Kamine, einen Abstand im Bereich zwischen 50 und 300 mm aufweist.

## Claims

1. A device for mixing and for distributing a gas and a liquid, adapted to be arranged upstream from a granular bed (2), comprising a substantially horizontal lower plate (21), said lower plate being equipped with a plurality of risers (22) evenly distributed over the surface of said plate, each riser comprising an upper part (23) and a lower end (25) communicating with the underside of said plate, upper part (23) of risers (22) being provided with at least one lateral orifice (26), a substantially horizontal upper plate (5) provided with means for carrying the liquid to the lower plate and with means (7) for separating gas from liquid and carrying gas above the upper plate (5), **characterized in that** said upper plate is secured and directly supported on the upper end of risers (22) of lower plate (21) so as to close the upper end of the risers.

2. A device as claimed in claim 1, wherein the means for carrying the liquid to lower plate (21) comprise orifices (6) distributed over the surface of said plate.

3. A device as claimed in claim 2, wherein the density of orifices (6) of the upper plate ranges between 100 and 3000 orifices/m².

4. A device as claimed in any one of claims 2 and 3, wherein the diameter of orifices (6) of the upper plate ranges between 1 and 20 mm.

5. A device as claimed in any one of claims 1 to 4, wherein the means for carrying the liquid to the lower plate comprise at least one line (61) whose ends (62, 63) are positioned so as to be immersed in the liquid accumulated at the level of the lower plate, for end (62), and in the liquid accumulated at the level of the upper plate, for end (63).

6. A device as claimed in claim 5, wherein upper end (63) of line (61) is arranged at a height that is below 50 mm in relation to the upper surface of upper plate (5).

7. A device as claimed in any one of claims 5 or 6, wherein lower end (62) of line (61) is arranged at a height that is lower than the lowest level of the lowest lateral orifice (26) of risers (22) of lower plate (21).

8. A device as claimed in any one of claims 5 to 7, wherein line (61) comprises means for controlling the liquid level in upper plate (5).

9. A device as claimed in any one of claims 1 to 8, wherein gas separation and carrying means (7) comprise tubes (8) open at their ends, arranged through upper plate (5) and whose upper end is provided with a cover (10) so as to allow passage of the gas only.

10. A device as claimed in claim 9, wherein the density of tubes (8) of the upper plate ranges between 3 and 30 risers/m².

11. A device as claimed in any one of claims 1 to 10, wherein gas separation and carrying means (7) comprise an opening (51) provided on the periphery of upper plate (5) and fitted with a rim (52), and a cover (53) covering said opening so as to allow passage of the gas only.

12. A device as claimed in any one of claims 1 to 11, wherein the density of risers (22) of lower plate (21) ranges between 100 and 700 risers/m².

13. A device as claimed in any one of claims 1 to 12, wherein risers (22) of lower plate (21) are prolonged below said plate over a height ranging between 10 and 100 mm.

14. A device as claimed in any one of claims 1 to 13, wherein the distance between lower end (25) of risers (22) of lower plate (21) and the upper surface of granular bed (2) below said plate is greater than zero and less than or equal to 300 mm.

15. A device as claimed in any one of claims 1 to 14, wherein upper part (23) of risers (22) is provided with a plurality of lateral orifices (26) positioned at different heights.

16. A device as claimed in claim 15, wherein lateral orifices (26) along upper part (23) of risers (22) of lower plate (21) are distributed over at least two levels, the lowest level being above the upper face of lower plate (21), at a distance ranging between 50 and 300 mm in relation to lower end (25) of the risers.
